# EUROPEAN PATENT SPECIFICATION

(11) **EP 2 207 845 B1**
(45) Date of publication and mention of the grant of the patent: **14.12.2011**
(21) Application number: 08802807.1
(22) Date of filing: 07.10.2008
(51) Int. Cl.: C08K 5/098, C08J 3/22, C08L 43/04, H01B 3/44

(54) **ELECTRICAL CABLE COMPRISING A CROSSLINKABLE POLYOLEFIN COMPOSITION COMPRISING DIHYDROCARBYL TIN DICARBOXYLATE AS SILANOL CONDENSATION CATALYST**
ELEKTRISCHES KABEL ENTHALTEND, VERNETZBARE POLYOLEFINZUSAMMENSETZUNG MIT DIHYDROCARBYLZINNDICARBOXYLAT ALS SILANOLKONDENSATIONSKATALYSATOR
CÂBLE ÉLECTRIQUE COMPRENANT UNE COMPOSITION POLYOLÉFINIQUE RÉTICULABLE COMPRENANT DU DICARBOXYLATE DE DIHYDROCARBYL-ÉTAIN COMME CATALYSEUR DE CONDENSATION DE SILANOL

(30) Priority: 08.11.2007 EP 07021727
(43) Date of publication of application: 21.07.2010
(73) Proprietor: Borealis Technology OY, 06101 Porvoo (FI)
(72) Inventor: FAGRELL, Ola, S-444 45 Stenungsund (SE); DAMMERT, Ruth, Helsinki (FI)
(74) Representative: Kador & Partner
(86) International application number: PCT/EP2008/008451
(87) International publication number: WO 2009/059670

(56) References cited:
- DE-A1-102004 061 983
- US-A- 4 574 133
- US-A- 5 430 091
- DATABASE CA [Online] CHEMICAL ABSTRACTS SERVICE, COLUMBUS, OHIO, US; 8 July 1999 (1999-07-08), NAGASE, SADAO ET AL: "Manufacture of crosslinkable olefin polymer compositions and crosslinked tubes" XP002464009 retrieved from STN Database accession no. 1999:421037 -& JP 11 181164 A (MITSUBISHI KAGAKU SANSHI K. K., JAPAN) 6 July 1999 (1999-07-06)
- DATABASE CA [Online] CHEMICAL ABSTRACTS SERVICE, COLUMBUS, OHIO, US; 27 January 2006 (2006-01-27), MU, XIAOBIN ET AL: "Silane-crosslinked polyethylene composites and production thereof" XP002464010 retrieved from STN Database accession no. 2006:76984 -& CN 1 624 038 A (SHANGHAI INSTITUTE OF FUNCTIONAL MACROMOLECULE MATERIAL, PEOP. REP. CH) 8 June 2005 (2005-06-08)
- DATABASE WPI Week 200062 Thomson Scientific, London, GB; AN 2000-641188 XP002464012 -& JP 2000 219785 A (SUMITOMO BAKELITE CO LTD) 8 August 2000 (2000-08-08)

## Description

The present invention relates to a low, medium or high voltage cable, wherein at least the insulating layer is made of a polyolefin composition comprising a crosslinkable polyolefin with hydrolysable silane groups and dihydrocarbyl tin dicarboxylate as a silanol condensation catalyst.

It is known to cross-link polyolefins by means of additives as this improves several of the properties of the polyolefin, such as mechanical strength and chemical heat resistance. Cross-linking may be performed by condensation of silanol groups contained in the polyolefin which can be obtained by hydrolysation of silane groups. A silane compound may be introduced as a cross-linkable group into a polyolefin e.g. by grafting the silane compound onto the polyolefin, or by copolymerisation of olefin monomers and silane group containing monomers. Such techniques are known e.g. from US 4,413,066, US 4.297,310, US 4,351,876, US 4,397,981, US 4,446,283 and US 4,456,704.

In the present invention, the polyolefin composition is used for the production of a wire or cable, in particular a low, medium or high voltage cable. Electric power cables for low voltages, i.e. voltages of below 3 kV, usually comprise an electric conductor which is coated with an insulation layer. Such low voltage cables are also denoted as single wire cables. Optionally, two or more of such single wire cables are surrounded by a common outermost sheath layer, the jacket.

A typical medium voltage power cable, usually used for voltages from 3 to 36 kV, and a typical high voltage cable used for voltages higher than 36 kV, comprises one or more conductors in a cable core that is surrounded by several layers of polymeric materials, including an inner semiconducting layer, followed by an insulating layer, and then an outer semiconducting layer. These layers are normally crosslinked. To these layers, further layers may be added, such as a metallic tape or wire shield, and, finally, an outermost jacketing layer. The layers of the cable are based on different types of polymer compositions. As insulating materials, today cross-linked polyolefins like crosslinked low density polyethylene are predominantly used.

For cross-linking of polyolefins containing hydrolysable silane groups, a silanol condensation catalyst must be used. Conventional catalysts are, for example, tin-, zinc-, iron-, lead- or cobalt-organic compounds such as dibutyl tin dilaurate (DBTDL).

However, it is known that DBTDL has a negative impact on the natural environment when the cross-linked products, such as cables, are installed in the ground. Furthermore, is also a hazardous material to work with.

It is hence an object of the present invention to provide a silanol condensation catalyst for a composition comprising a polyolefin with hydrolysable silane groups for at least the insulating layer of a low, medium or high voltage cable, which avoids the drawbacks of DBTDL, i.e. which is more environmentally friendly and less hazardous to work with. At the same time, however, the composition should yield good or even improved cross-linking results, so that the properties of the final products comprising the cross-linked composition are similar or even improved over products in which DBTDL was used as silanol condensation catalyst. In particular, it is an object to provide a low, medium or high voltage cable in which at least an insulating layer has been crosslinked in the presence of a silanol condensation catalyst, and which cable shows improved electrical breakdown strength.

It has now surprisingly been found that the above objects can be achieved by the use of a silanol condensation catalyst which is a dihydrocarbyl tin dicarboxylate with a higher number of carbon atoms in the hydrocarbyl groups.

The present invention therefore provides a low, medium or high voltage cable, wherein at least the insulating layer is made of a polyolefin composition comprising
(i) a crosslinkable polyolefin with hydrolysable silane groups (A) being obtained by copolymerization with an unsaturated silane compound represented by the formula (II)

   R¹SiR²qY_{3-q} (II)

   wherein
   R¹ is an ethylenically unsaturated hydrocarbyl, hydrocarbyloxy or (meth)acryloxy hydrocarbyl group,
   R² is an aliphatic saturated hydrocarbyl group,
   Y, which may be the same or different, is a hydrolysable organic group, and
   q is 0, 1 or 2,
(ii) a dihydrocarbyl tin dicarboxylate (B) as a silanol condensation catalyst according to the following formula (I): 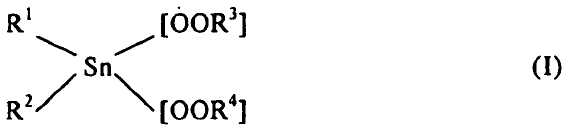 wherein
   R¹ and R² independently are hydrocarbyl groups having at least 6 carbon atoms, and
   R³ and R⁴ independently are hydrocarbyl groups having at least 8 carbon atoms.

It has been found that in the composition of the invention cross-linking is obtained which is similar or even improved over cross-linking obtained by the use of DBTDL. Simultaneously, products comprising the composition are more environmentally friendly, and less restrictions apply for the production and handling of the composition due to the less hazardous silanol condensation catalyst.

Furthermore, when used in the production of a low, medium or high voltage cable, improved breakdown strength is obtained.

In a preferred embodiment of the silanol condensation catalyst (B), in formula (I), R¹, R², R³ and R⁴ independently are alkyl groups, more preferably are straight chain alky groups.

Furthermore, in formula (I), preferably R¹ and R² independently have at least 7 carbon atoms, more preferably R¹ and R² independently have at least 8 carbon atoms.

Still further, in formula (I), preferably R¹ and R² independently have at most 20 carbon atoms, more preferably have at most 15 carbon atoms, and still more preferably have at least 12 carbon atoms.

In formula (I), preferably R³ and R⁴ independently have at least 9 carbon atoms, more preferably R³ and R⁴ independently have at least 10 carbon atoms.

Furthermore, in formula (I), preferably R³ and R⁴ independently have at most 25 carbon atoms, more preferably have at most 20 carbon atoms, and still more preferably have at least 15 carbon atoms.

In the most prefered embodiment, the dihydrocarbyl tin dicarboxylate (B) is dioctyl tin dilaurate.

Preferably, in the polyolefin composition according to the invention the silanol condensation catalyst (B) is present in an amount of 0.0001 to 6 wt.%, more preferably of 0.001 to 2 wt.%, and most preferably 0.02 to 0.5 wt.%.

The composition of the present invention comprises a cross-linkable polyolefin containing hydrolysable silane groups (A).

More preferably the cross-linkable polyolefin comprises, still more preferably consists of, a polyethylene containing hydrolysable silane groups.

The hydrolysable silane groups may be introduced into the polyolefin by copolymerisation of e.g. ethylene monomers with silane group containing comonomers or by grafting, i.e. by chemical modification of the polymer by addition of silane groups mostly in a radical reaction. Both techniques are well known in the art.

Preferably, the silane group containing polyolefin has been obtained by copolymerisation. In the case of polyolefins, preferably polyethylene, the copolymerisation is carried out with an unsaturated silane compound represented by the formula

R¹SiR²_{q}Y_{3-q} (II)

wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2.

Special examples of the unsaturated silane compound are those wherein R¹ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R², if present, is a methyl, ethyl, propyl, decyl or phenyl group.

A preferred unsaturated silane compound is represented by the formula

CH₂=CHSi(OA)₃ (III)

wherein A is a hydrocarbyl group having 1-8 carbon atoms, preferably 1-4 carbon atoms.

The most preferred compounds are vinyl trimethoxysilane, vinyl bismethoxyethoxysilane, vinyl triethoxysilane, gamma-(meth)acryloxypropyl trimethoxysilane, gamma(meth)acryloxypropyl triethoxysilane, and vinyl triacetoxysilane, or combinations of two or more thereof.

The copolymerisation of the olefin, e.g. ethylene, and the unsaturated silane compound may be carried out under any suitable conditions resulting in the copolymerisation of the two monomers.

The silane group containing polyolefin (A) preferably contains 0.001 to 15 wt.% of the silane group containing monomers, more preferably 0.01 to 5 wt.%, and most preferably 0.1 to 3 wt.%, and most preferably 0.1 to 2 wt.%.

It is furthermore preferred that the composition comprises a polyolefin with polar group containing monomer units.

Preferably, the polar groups are selected from siloxane, amide, anhydride, carboxylic, carbonyl, hydroxyl, ester and epoxy groups.

The polar groups may for example be introduced into the polymer by grafting of an ethylene polymer with a polar-group containing compound, i.e. by chemical modification of the polyolefin by addition of a polar group containing compound mostly in a radical reaction. Grafting is e.g. described in US 3,646,155 and US 4,117,195.

It is, however, preferred that said polar groups are introduced into the polymer by copolymerisation of olefinic, including ethylene, monomers with comonomers bearing polar groups.

As examples of comonomers having polar groups may be mentioned the following: (a) vinyl carboxylate esters, such as vinyl acetate and vinyl pivalate, (b) (meth)acrylates, such as methyl(meth)acrylate, ethyl(meth)-acrylate, butyl(meth)acrylate and hydroxyethyl(meth)acrylate, (c) olefinically unsaturated carboxylic acids, such as (meth)acrylic acid, maleic acid and fumaric acid, (d) (meth)acrylic acid derivatives, such as (meth)acrylonitrile and (meth)acrylic amide, and (e) vinyl ethers, such as vinyl methyl ether and vinyl phenyl ether.

Amongst these comonomers, vinyl esters of monocarboxylic acids having 1 to 4 carbon atoms, such as vinyl acetate, and (meth)acrylates of alcohols having 1 to 4 carbon atoms, such as methyl (meth)acrylate, are preferred. Especially preferred comonomers are butyl acrylate, ethyl acrylate and methyl acrylate. Two or more such olefinically unsaturated compounds may be used in combination. The term "(meth)acrylic acid" is intended to embrace both acrylic acid and methacrylic acid.

Preferably, the polar group containing monomer units are selected from the group of acrylates.

The amount of polar group containing monomer units in the polyolefin preferably is 40 wt.% or less, more preferably 35 wt.% or less, and still more preferably is between 1 and 20 wt.%.

Furthermore, preferably the polar group containing monomer units are present in the polyolefin in an amount of from 1 to 15 mol%, more preferably 3 to 10 mol%, and most preferably 3.5 to 6 mol%.

In a particularly preferred embodiment, the crosslinkable polyolefin with hydrolysable silane groups (A) at the same time also contains the polar groups in any of the embodiments as described hereinbefore, i.e. the polyolefin is a terpolymer containing both the silane groups and the polar groups.

Furthermore, also the preferred amounts for the silane group and the polar group containing monomers as described above apply for the terpolymer.

Such terpolymers may be produced by grafting, or, preferably, by copolymerisation of olefin monomers and unsaturated monomers containing silane groups and polar groups.

If such a terpolymer containing both the silane groups and the polar groups is used in the composition of the invention, it is preferred that it makes up at least 80 wt.% of the total composition, more preferably at least 85 wt.%, and most preferably at least 90 wt.%.

The polymer composition according to the invention may further contain various additives, such as miscible thermoplastics, antioxidants, further stabilizers e.g. water tree retardants, scorch retardants, lubricants, fillers, colouring agents and foaming agents.

The total amount of additives is generally 0.3 to 10 wt.%, preferably 1 to 7 wt.%, more preferably 1 to 5 wt.%.

As antioxidant, preferably a compound, or a mixture of such compounds, is used which is neutral or acidic, must comprise a sterically hindered phenol group or aliphatic sulphur groups. Such compounds are disclosed in EP 1 254 923 to be particularly suitable antioxidants for stabilisation of polyolefins containing hydrolysable silane groups which are crosslinked with a silanol condensation catalyst, in particular an acidic silanol condensation catalyst. Other preferred antioxidants are disclosed in WO2005003199A1.

Preferably, the antioxidant is present in the composition in an amount of from 0.01 to 3 wt.%, more preferably 0.05 to 2 wt.%, and most preferably 0.08 to 1.5 wt.%.

The silanol condensation catalyst (B) usually is added to the silane group containing polyolefin by compounding the polymer with a so-called master batch, in which the catalyst, and optionally further additives are contained in a polymer, e.g. polyolefin, matrix in concentrated form.

The master batch for the crosslinkable polyolefin composition according to claim1 comprises a matrix polymer and a silanol condensation catalyst (B) in any of the above described embodiments.

The matrix polymer is preferably a polyolefin, more preferably a polyethylene, which may be a homo- or copolymer of ethylene, e.g. low density polyethylene, or polyethylene-methyl-, -ethyl, or -butyl-acrylate copolymer containing 1 to 50 wt.% of the acrylate, and mixtures thereof.

As stated, in the master batch the compounds to be added to the silane group containing polyolefin are contained in concentrated form, i.e. in a much higher amount than in the final composition.

The master batch preferably comprises component (B) in an amount of from 0.3 to 15 wt.%, more preferably from 0.7 to 10 wt.%.

Furthermore, preferably the master batch also contains some or all of the additives, for example the stabilizers.

It is preferred that amount of the stabilizers contained in the master batch is up to 10 wt.%.

The master batch preferably is compounded with the silane group containing polymer in an amount of from 1 to 10 wt.%, more preferably from 2 to 8 wt.%.

Compounding may be performed by any known compounding process, including extruding the final product with a screw extruder or a kneader.

The present invention relates to a low, medium or high voltage cable, comprising at least the insulating layer mode of the polyolefin composition described above.

In a preferred embodiment, the invention relates to a medium or high voltage cable comprising one or more conductors in a cable core, an inner semiconducting layer, followed by an insulating layer, and then an outer semiconducting layer, wherein at least one of these layers, preferably the insulating layer, comprises the polyolefin composition as described above.

Insulating layers for medium or high voltage power cables generally have a thickness of at least 2 mm, typically at least 2.3 mm, and the thickness increases with increasing voltage the cable is designed for.

In addition to the semiconductive and insulating layers, further layers may be present in medium or high voltage cables, such as a metallic tape or wire shield, and, finally, an outermost jacketing layer.

Usually, the cable is produced by co-extrusion of the different layers onto the conducting core. Then, cross-linking is performed by moisture curing, wherein in the presence of the silanol condensation catalyst the silane groups are hydrolysed under the influence of water or steam, resulting in the splitting off of alcohol and the formation of silanol groups, which are then cross-linked in a condensation reaction wherein water is split off.

Usually, moisture curing is performed in a sauna or water bath at temperatures of 70 to 100 °C.

The following examples serve to further illustrate the present invention.

### Examples

### 1. Measurement Methods

### a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylenes and may be determined at different loadings such as 2.16 kg (MFR₂) or 21.6 kg (MFR₂₁). The MFR is determined at 230°C for polypropylenes.

### b) Hot set elongation

The crosslinking rate was determined according to IEC-811-2-1-9 (hot set method and permanent set) by measuring the thermal deformation at 200 °C and a load of 20 N/cm² after various times of crosslinking at 23 °C and 50% R. H.

### c) Wafer boiling test

Wafer boiling test was performed in accordance with AEIC CS5-94.

Any outer covering and the conductor was removed. A representative cross section containing the extruded conductor shield and insulation shield, was cut from the cable. The resulting wafer was at least 25 mils (0.64 mm) thick were immersed in boiling decahydronaphthalene with 1 wt.-% antioxidant 2246 for five hours using the equipment specified in ASTM D2765. The wafer(s) then were removed from the solvent and examined for shield/insulation interface continuity with a minimum 15-power magnification. To pass the requirements the insulation shield should after above treatment be without cracks and continuously adhere 360° to the insulation.

### e) Crosslinking Speed

Crosslinking of the silane crosslinkable cables is done by bending a 70 to 80 cm long MV cable 180° in a form of an U. The ends of the cables is protected from moisture ingress by for example using end cups. The lower part of the U shaped cables sample are placed in a water bath in that way that the end of the cable is above the water surface. The water bath had the temperature 90 °C. Water will then start to migrate from the surface of the cable in the direction to the conductor. When the water front is passing through the cable insulation the crosslinking will occur and form a crosslinking front.

Samples are taken out of the water bath at different times and a 1 cm thick slice of the cross section is cut out about 35 to 40 cm from the end of the cable. To make the crosslinking front visible by naked eye the slice are put in an oven having a temperature at 200 °C for 15 min (the non crosslinked part will melt in a different way) and then cooled to room temperature. The crosslinking front is clearly visible and the distance in mm from the interface of the outer semiconductive and the insulation is measured at 4 places 90° from each other round the cables in a microscope. The average value of 3 slices / cable sample is reported.

### f) Electrical breakdown strength after wet ageing

The wet ageing test is based on a procedure described in an article by Land H.G. and Schädlich H., "Model Cable Test for Evaluating the Ageing Behaviour under Water Influence of Compounds for Medium Voltage Cables", Conference Proceedings of Jicable 91, June 24 to 28, 1991, Versailles, France and in the article by U.H. Nilsson "The Use of Model Cables for Evaluation of the Electrical Performance of Polymeric Power Cable Materials", Conference Proceedings of NORD-IS, June 13 to 15, 2005 , Trondheim, Norway.

The wet ageing properties were evaluated on model cables. These cables consist of a 1.38 mm diameter Cu wire onto which an inner semiconductive layer, an insulation layer and an outer semiconductive layer are applied. The model cable has the following construction: inner semiconductive layer of 0.7 mm, insulation layer of 1.5 mm and outer semiconductive layer of 0.15 mm. The cables are extruded in a 1+2 extruder configuration and vulcanised in a dry-curing CCV tube, i.e. the material is crosslinked. After this the model cables are preconditioned at 80 °C for 72 h.

The Cu wire is removed and then replaced by a thinner Cu wire. The cables are put into water bath to be aged for 1000 h under electric stress and at a temperature of 70 °C of the surrounding water and at a temperature of the water in the conductor area of 85 °C. The initial breakdown strength as well as the breakdown strength after 1000 h wet ageing are determined. The cables are prepared and aged as described below.

| | |
|---|---|
| • Preconditioning: | 80 °C, 72 h |
| • Applied voltage: | 9 kV/50 Hz |
| • Electric stress (max.): | 9 kV/mm |
| • Electric stress (mean): | 6 kV/nim |
| • Conductor temperature: | 85 °C |
| • Water bath temperature: | 70 °C |
| • Ageing time: | 1000 h |
| • Deionized water in conductor and outside | |

Five specimens with 0.50 m active length from each cable are aged.

The specimens are subjected to AC breakdown tests (voltage ramp: 100 kV/min.) and the Weibull 63.2 % values of the breakdown strength (field stress at the inner semiconductive layer) are determined before and after ageing.

### 2. Compositions Produced

### a) Master batches

Master batches were produced comprising:
- a matrix resin: an ethylene butylacrylate copolymer with 17 wt.% butylacrylate, a density of 924 kg/m³ and a MFR₂ of 17 g/10 min;
- a silanol condensation catalyst: dioctyl tin dilaurate (DOTL) in accordance with the invention; or dibutyl tin dilaurate (DBTL) as a conventional silanol condensation catalyst;
- *a silane containing compound* [silane 2, Dynasilane Degussa]
- stabilizer 1: pentaerythrityl-tetrakis(3-(3',5'-di-ter. butyl-4-hydroxyphenyl)-propionate (CAS-no. 6683-19-8)
- stabilizer 2: 4.4'-thiobis(2-tert. butyl-5-methylphenol) (CAS-no. 96-69-5)

The components were used in the master batches in the amounts as indicated in Table 1 (data given in wt.%). Compounding of the master batches was performed using a Brabender kneader (small chamber, 47 cm³), and 3 mm thick plates were compression moulded at 180 °C.

**Table 1:**

| | **MB1** | **MB2 (Comp.)** |
|---|---|---|
| Matrix | 90.9 | 91.3 |
| DOTL | 2.4 | |
| DBTL | | 2 |
| Stabilizer 1 | 1.7 | 1.7 |
| Stabilizer 2 | | 2 |
| Silane 2 | 2 | 2 |
| Zn-Stearate | 1 | 1 |

### b) Compositions

Pellets of the master batches of Table 1 were dry blended in an amount of 5 wt.% with 95 wt.% pellets of a silane group containing polyethylene having a density of 923 kg/m³, a MFR₂ of 0.9 g/10 min and a silane copolymer content of 1.3 wt.% to yield the compositions for the insulating layer of a power cable (insulating composition 1 (IC1) using the master batch MB1, and comparative insulating composition 2 (IC2, Comp.) using the master batch MB2 (Comp.)). (When cables were produced these pellet blend were melted together and homogenised in the insulation extruder of the cable line to form the final insulation.)

Furthermore, the composition as indicated in Table 2 (data given in wt.%) were prepared for the production of the semiconductive layer, using the following compounds:
- EBA-silane terpolymer: ethylene butyl acrylate vinyl trimethylsilane terpolymer containing 17 wt.% butyl acrylate, 1.8 wt.% vinyl trimethylsilane, and having a MFR₂ of 7 g/10 min,
- LDPE: low-density polyethylene with MFR₂ of 2 g/10min,
- EVA: ethylene vinyl acrylate copolymer with 28 wt.% vinyl acrylate, and a MFR₂ of 7 g/10 min,
- PP: propylene/ethylene random copolymer with en ethylene content of 8 wt.% and an MFR (2.16 kg, 230 °C) of 20,
- CB1: carbon black: EnsacoMS210
- CB2: carbon black: EnsacoMS250
- Stabilizer 3: Polymer of 2,2,4-trimethyl-1,2-dihydroquinoline (CAS-no. 26780-96-1)
- *Peroxide:*
- Silane 1: [Siquest A-151, Degussa]

**Table 2:**

| | **Semiconductive Composition 1 (bonded semicon)** | **Semiconductive Composition 2 (strippable semicon)** |
|---|---|---|
| EBA-silane terpolymer | 47 | |
| LDPE | 24 | |
| EVA | | 47.6 |
| PP | | 15 |
| CB1 | 28 | |
| CB2 | | 35 |
| Stabiliser 3 | 1 | 1 |
| Peroxide | | 0.2 |
| Silane 1 | | 1.2 |

To test the crosslinking behaviour, cables were produced using the insulating compositions IC1 and IC2 (Comp.) for the production of insulating layers and semiconductive composition SC2 for the production of the outer semiconductive layers.

### c) Production of Cables

The cables, model cables as well as power cables, were prepared using a so called 1 plus 2 extruder set-up. That means that the inner semiconductive layer was extruded on the conductor first in an own head, and then the insulation and outer semiconductive layer are jointly extruded together and on the inner semiconductive in a double extruder head. The inner and outer semiconductive layer was a 45 mm and the insulation was a 60 mm extruder.

When producing the model cable the line speed was 8 m/min, and for the power cable 1.6 m/min was used.

The cables produced had the following properties:

| | Power cable construction | Model cable |
|---|---|---|
| Conductor diameter | 50 mm² Al | 1.5 mm² Al |
| Inner semiconductive layer thickness | 0.85 mm | 0.7 mm |
| Insulation layer plus MB thickness | 5.5 mm | 1.7 mm |
| Outer semiconductive layer thickness | 1 mm | 0.4 mm |

The MB was only added to the insulation layer. The catalyst then during crosslinking migrates from the insulation layer out to the semiconductive layer and catalyses the crosslinking reaction.

The crosslinking of the cables were done in water bath having 90 °C.

The results of the tests are given in Table 3 as regards the final cross-linking properties, and in Table 4 as regards the cross-linking speed.

**Table 3:**

| | Cable 1 | | Cable 2 (Comp.) | |
|---|---|---|---|---|
| | insulating layer (IC1) | outer semiconductive layer (SC2) | insulating layer (IC2) | outer semiconductive layer (SC2) |
| Hot set elongation (%) | 57 | 53 | 47 | 46 |
| Permanent set(%) | 2.9 | 4 | 3.5 | 2.3 |
| Wafer boiling test | ok | ok | ok | ok |

**Table 4:**

| Crosslinking time/h | Cable 1* | Cable 2 (Comp.)* |
|---|---|---|
| 3 | 2.56 | 2.73 |
| 8 | 3.68 | 3.9 |
| 16 | 4.82 | 4.94 |
| 20 | 5.4 | 4.48 |
| 24 | 5.47 | 5.48 |

| | | |
|---|---|---|
| * Cross-linking in mm from surface | | |

Furthermore, to test the electrical breakdown strength, cables 3 and 4 (Comp.) were produced using the insulating compositions IC1 and IC2 (Comp.) for the production of insulating layers and semiconductive composition SC1 for the production of the inner and outer semiconductive layers. Thus, cable 3 had an inner semiconductive layer made of SC1, an insulating layer made of IC1 and an outer semiconductive layer made of SC1, whereas cable 4 (Comp.) had an inner semiconductive layer made of SC1, an insulating layer made of IC2 (Comp.) and an outer semiconductive layer made of SC1.

The percentage hot set elongation for Cable 3 with the insulating composition according to the invention was about 45, 38, and 28% after 2, 3, and 4 days of crosslinking, respectively.

Both cables were aged for 1000 h. Cable 3 after ageing showed an electrical breakdown strength of 49.7 kV, whereas cable 4 had an electrical breakdown strength of 49.1 kV.

## Claims

1. A low, medium or high voltage cable, wherein at least the insulating layer is made of a polyolefin composition comprising
(i) a crosslinkable polyolefin with hydrolysable silane groups (A) being obtained by copolymerization with an unsaturated silane compound represented by the formula (II)
R¹SiR²_{q}Y_{3-q} (II)
wherein
R¹ is an ethylenically unsaturated hydrocarbyl, hydrocarbyloxy or (meth)acryloxy hydrocarbyl group,
R² is an aliphatic saturated hydrocarbyl group,
Y, which may be the same or different, is a hydrolysable organic group, and
q is 0, 1 or 2,
(ii) a dihydrocarbyl tin dicarboxylate (B) as a silanol condensation catalyst according to the following formula (I): 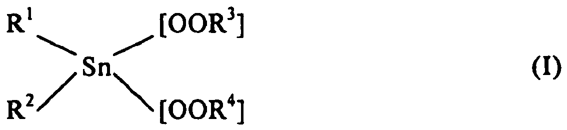 wherein
R¹ and R² independently are hydrocarbyl groups having at least 6 carbon atoms, and
R³ and R⁴ independently are hydrocarbyl groups having at least 8 carbon atoms.

2. Cable according to claim 1, wherein in formula (I) R¹, R², R³ and R⁴ independently are straight chain alkyl groups.

3. Cable according to claim 1 or claim 2, wherein in formula (I) R¹ and R² independently have at most 20 carbon atoms.

4. Cable according to any of the preceding claims, wherein in formula (I) R³ and R⁴ independently have at most 25 carbon atoms.

5. Cable according to any of the preceding claims, wherein dihydrocarbyl tin dicarboxylate (B) is dioctyl tin dilaurate.

6. Cable according to any of the preceding claims, in which silanol condensation catalyst (B) is present in an amount of 0.0001 to 6 wt.%.

7. Cable according to any of the preceding claims, wherein the crosslinkable polyolefin with hydrolysable silane groups (A) comprises a polyethylene with hydrolysable silane groups.

8. Cable according to any of the preceding claims, wherein in the crosslinkable polyolefin with hydrolysable silane groups (A) the silane groups are present in an amount of 0.001 to 15 wt.% of component (A).

9. Cable according to any of the preceding claims, which contains a polyolefin with polar groups.

10. Cable according to claim 9, wherein in the polyolefin the polar groups are present in an amount of 40 wt.% or less.

11. Cable according to claim 9 or 10, wherein the crosslinkable polyolefin with hydrolysable silane groups (A) is a terpolymer containing also polar groups.

12. Cable according to any of the preceding claims, wherein the cable is a medium or high voltage cable comprising an inner semiconductive layer, an insulating layer and an outer semiconductive layer.

## Patentansprüche

1. Kabel für Nieder-, Mittel- oder Hochspannung, wobei zumindest die isolierende Schicht aus einer Polyolefinzusammensetzung hergestellt ist, umfassend:
(i) ein vernetzbares Polyolefin mit hydrolysierbaren Silangruppen (A), das durch Copolymerisation mit einer ungesättigten Silanverbindung erhalten wird, die mit der Formel (II) angegeben wird
R¹SiR²qY_{3-q} (II)
worin
R¹ ein ethylenisch ungesättigter Kohlenwasserstoff-, Hydrocarbyloxy- oder (Meth)arcyloxyhydrocarbylrest ist,
R² ein aliphatischer gesättigter Kohlenwasserstoffrest ist,
Y, das gleich oder verschieden sein kann, ein hydrolysierbarer organischer Rest ist, und
q gleich 0, 1 oder 2 ist;
(ii) ein Dihydrocarbylzinndicarboxylat (B) als Silanolkondensationskatalysator gemäß der folgenden Formel (I): 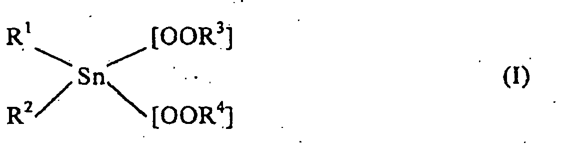 worin
R¹ und R² unabhängig voneinander Kohlenwasserstoffreste mit mindestens 6 Kohlenstoffatomen sind, und
R³ und R⁴ unabhängig voneinander Kohlenwasserstoffreste mit mindestens 8 Kohlenstoffatomen sind.

2. Kabel nach Anspruch 1, wobei in der Formel (I) R¹, R², R³ und R⁴ unabhängig voneinander geradkettige Alkylgruppen sind.

3. Kabel nach Anspruch 1 oder Anspruch 2, wobei in der Formel (I) R¹ und R² unabhängig voneinander höchstens 20 Kohlenstoffatome haben.

4. Kabel nach einem der vorstehenden Ansprüche, wobei in der Formel (I) R³ und R⁴ unabhängig voneinander höchstens 25 Kohlenstoffatome haben.

5. Kabel nach einem der vorstehenden Ansprüche, wobei das Dihydrocarbylzinndicarboxylat (B) Dioctylzinndilaurat ist.

6. Kabel nach einem der vorstehenden Ansprüche, wobei der Silanolkondensationskatalysator (B) in einer Menge von 0,0001 bis 6 Gew.-% vorliegt.

7. Kabel nach einem der vorstehenden Ansprüche, wobei das vernetzbare Polyolefin mit hydrolysierbaren Silangruppen (A) ein Polyethylen mit hydrolysierbaren Silangruppen umfaßt.

8. Kabel nach einem der vorstehenden Ansprüche, wobei im vernetzbaren Polyolefin mit hydrolysierbaren Silangruppen (A) die Silangruppen in einer Menge von 0,001 bis 15 Gew.-% der Komponente (A) vorliegen.

9. Kabel nach einem der vorstehenden Ansprüche, das ein Polyolefin mit polaren Gruppen enthält.

10. Kabel nach Anspruch 9, wobei im Polyolefin die polaren Gruppen in einer Menge von 40 Gew.-% oder weniger vorliegen.

11. Kabel nach Anspruch 9 oder 10, wobei das vernetzbare Polyolefin mit hydrolysierbaren Silangruppen (A) ein Terpolymer ist, das auch polare Gruppen enthält.

12. Kabel nach einem der vorstehenden Ansprüche, wobei das Kabel ein Mittel- oder Hochspannungskabel ist, umfassend eine innere halbleitende Schicht, eine isolierende Schicht und eine äußere halbleitende Schicht.

## Revendications

1. Câble à basse, moyenne ou haute tension, dans lequel au moins la couche isolante est faite d'une composition de polyoléfines comprenant
(i) une polyoléfine réticulable avec des groupes silanes hydrolysables (A) qui sont obtenus par copolymérisation avec un composé silane insaturé représenté par la formule (II)
R¹SiR²_{q}Y_{3-q} (II)
où
R¹ est un groupe hydrocarbyle, hydrocarbyloxy ou (méth)acryloxy hydrocarbyle à insaturation éthylénique,
R² est un groupe hydrocarbyle aliphatique saturé,
Y, qui peut être identique ou différent, est un groupe organique hydrolysable, et
q est égal à 0, 1 ou 2,
(ii) un dicarboxylate de dihydrocarbyle étain (B) en tant qu'un catalyseur de condensation de silanol selon la formule suivante (I) : 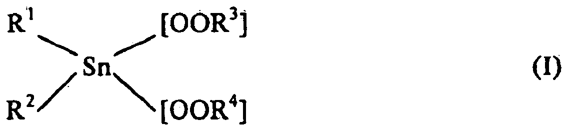 où
R¹ et R² sont indépendamment des groupes hydrocarbyles ayant au moins 6 atomes de carbone, et
R³ et R⁴ sont indépendamment des groupes hydrocarbyles ayant au moins 8 atome de carbone.

2. Câble selon la revendication 1, dans lequel dans la formule (I), R¹, R², R³ et R⁴ sont indépendamment des groupes alkyles à chaîne linéaire.

3. Câble selon la revendication 1 ou la revendication 2, dans lequel dans la formule (I), R¹ et R² possèdent indépendamment au moins 20 atomes de carbone.

4. Câble selon l'une quelconque des revendications précédentes, dans lequel dans la formule (I), R³ et R⁴ possèdent indépendamment au moins 25 atomes de carbone.

5. Câble selon l'une quelconque des revendications précédentes, dans lequel le dicarboxylate de dihydrocarbyle étain (B) est le dilaurate de dioctyle étain.

6. Câble selon l'une quelconque des revendications précédentes, dans lequel le catalyseur de condensation de silanol (B) est présent dans une quantité de 0,0001 % à 6 % en poids.

7. Câble selon l'une quelconque des revendications précédentes, dans lequel la polyoléfine réticulable avec des groupes silanes hydrolysables (A) comprend un polyéthylène avec des groupes silanes hydrolysables.

8. Câble selon l'une quelconque des revendications précédentes, dans lequel dans la polyoléfine réticulable avec des groupes silanes hydrolysables (A), les groupes silanes sont présents dans une quantité de 0,001 % à 15 % en poids du composant (A).

9. Câble selon l'une quelconque des revendications précédentes, qui contient une polyoléfine avec des groupes polaires.

10. Câble selon la revendication 9, dans lequel dans la polyoléfine, les groupes polaires sont présents dans une quantité de 40 % en poids ou moins.

11. Câble selon la revendication 9 ou 10, dans lequel la polyoléfine réticulable avec des groupes silanes hydrolysables (A) est un terpolymère contenant également des groupes polaires.

12. Câble selon l'une quelconque des revendications précédentes, lequel câble est un câble à moyenne ou haute tension comprenant une couche semiconductrice intérieure, une couche isolante et une couche semiconductrice extérieure.
